# EUROPÄISCHE PATENTANMELDUNG

(11) **EP 2 418 149 A2**
(43) Veröffentlichungstag der Anmeldung: **15.02.2012**
(21) Anmeldenummer: 11177081.4
(22) Anmeldetag: 10.08.2011
(51) Int. Cl.: B64D 9/00

(54) **Seitenführung, Seitenführungsgruppe und Frachtdeck**

(30) Priorität: 13.08.2010 DE 102010036983
(71) Anmelder: Telair International GmbH, 83714 Miesbach (DE)
(72) Erfinder: Huber, Thomas, 83727 Schliersee (DE); Holzner, Richard, 83071 Stephanskirchen (DE)
(74) Vertreter: Bohnenberger, Johannes

(57) **Zusammenfassung**

Die vorliegende Erfindung betrifft eine Seitenführung zum Führen von Frachtstücken in einem Flugzeug. Derartige Seitenführungen werden dazu verwendet, um Container oder Paletten bei ihrem Transport vom Heck zum Bug zu führen und in ihrer Endposition festzuhalten. Die vorgeschlagene Seitenführung hat einen sich in Längsrichtung erstreckenden Befestigungsrahmen und mindestens eine Seitenführungsvorrichtung (40,50) mit einem Schlitten (47,57), wobei die Seitenführungsvorrichtung in Längsrichtung verschiebbar im Befestigungsrahmen gelagert ist. Der Schlitten weist mindestens eine Führungsrolle (45,55) zum Abstützen der Frachtstücke auf.

## Beschreibung

Die Erfindung betrifft eine Seitenführung zum Führen von Frachtstücken, eine Seitenführungsgruppe mit einer Vielzahl von entsprechenden Seitenführungen sowie ein mit einer entsprechenden Seitenführung oder Seitenführungsgruppe ausgestattetes Frachtdeck.

Es ist bekannt, dass Laderäume von Flugzeugen für unterschiedliche Verwendungszwecke häufig umgebaut werden. Beispielsweise kann es notwendig sein, ein Frachtdeck in Abhängigkeit von den zu ladenden Frachtstücken zu konfigurieren. Bei dem Transport von Ladung in Flugzeugen werden häufig Frachtstücke, z.B. Container oder Paletten, mit genormten Abmessungen verwendet. So gibt es für Container beispielsweise folgende Normgrößen: 123,5 auf 317,5 cm (88 Zoll x 125 Zoll), 143,8 cm auf 317,5 cm (96 Zoll x 125 Zoll), 223,5 cm auf 157,5 cm (88 Zoll x 62 Zoll). Im militärischen Bereich werden häufig Paletten mit einer Abmessung von 274,3 cm auf 223,5 cm (108 Zoll x 88 Zoll) verwendet. Zum Festhalten und Führen derartiger genormter Frachtstücke werden auf dem Frachtdeck montierte Seitenführungen verwendet. Für eine optimale Auslastung eines Frachtraums ist es notwendig, eine Vielzahl von Konfigurationsmöglichkeiten anzubieten, wobei ein schnelles Umrüsten des Frachtdecks eine hohe Priorität genießt. Geeignete Seitenführungen müssen schnell und einfach anbringbar und umkonfigurierbar sein, da die Kosten für das Betreiben von entsprechenden Flugzeugen sehr hoch sind. Des Weiteren soll die Umkonfiguration sehr einfach durchführbar sein, da das Personal, das diese Umkonfigurationen durchführt, häufig keine oder lediglich eine schlechte Schulung für die verwendeten Frachtdecks genossen hat. Hinzu kommt, dass die Seitenführungen sehr robust sein müssen, da diese sehr hohen Lasten ausgesetzt sind und eine schonende Behandlung aufgrund des hohen Zeitdrucks beim Be- und Entladen nicht gefordert werden kann. Ein Frachtdeck mit entsprechenden Seitenführungen ist häufig der Nässe, hohen Temperaturunterschieden, Staub und anderen rohen Einflüssen ausgesetzt. Ein defektes Frachtdeck - auch bereits ein defektes Funktionselement des Frachtdecks - kann dazu führen, dass das entsprechende Flugzeug für mehrere Tage nicht eingesetzt werden kann. Ein derartiger Ausfall ist sehr teuer.

Die Bestückung des Frachtdecks eines Flugzeugs macht sich bei dem Gesamtgewicht des Flugzeugs deutlich bemerkbar, so dass es wünschenswert ist, hier Gewicht einzusparen.

Aus der EP 1 179 472 A2 sind Seitenführungen bekannt, die es ermöglichen, ein Frachtdeck schnell und einfach umzukonfigurieren, so dass unterschiedliche Frachtstücke mit unterschiedlichen Abmessungen geladen werden können. Die dort verwendeten Seitenführungen lassen sich hierfür teilweise absenken, so dass andere hierfür vorgesehene Seitenführungen die Führungs- und Befestigungsfunktion übernehmen. Ein Nachteil des in der EP 1 179 472 A2 beschriebenen Frachtdecks besteht darin, dass die Umkonfiguration mitunter sehr aufwändig ist. Des Weiteren müssen für die unterschiedlichen Konfigurationen des Frachtdecks eine Vielzahl von Funktionselementen, z. B. Seitenriegel, Längsriegel, PDUs, vorgesehen werden, die insgesamt ein sehr hohes Gewicht haben.

Ausgehend von der EP 1 179 472 A2 ist es Aufgabe der vorliegenden Erfindung, eine Seitenführung für ein Frachtdeck, das eine Vielzahl von unterschiedlichen Konfigurationen ermöglicht, bereitzustellen, die robust ist, sich einfach bedienen lässt und bei einer Bestückung zu einem Frachtdeck mit einem geringen Gewicht führt. Des Weiteren soll eine entsprechende Seitenführungsgruppe und ein entsprechendes Frachtdeck bereitgestellt werden.

Die Aufgabe wird erfindungsgemäß durch eine Seitenführung zum Führen von Frachtstücken, insbesondere Containern und/oder Paletten in einem Flugzeug gelöst, wobei die Seitenführung umfasst:
- einen sich in Längsrichtung erstreckenden Befestigungsrahmen;
- mindestens eine Seitenführungsvorrichtung mit einem Schlitten, wobei die Seitenführungsvorrichtung in Längsrichtung verschiebbar in dem Befestigungsrahmen gelagert ist, wobei der Schlitten mindestens eine Führungsrolle zum Abstützen der Frachtstücke aufweist.

Seitenführungen in Flugzeugen werden üblicherweise dazu verwendet, Frachtstücke in Längsrichtung des Flugzeugs (von Bug zu Heck, oder von Heck zu Bug) zu leiten. Während des Fluges nehmen sie Kräfte quer zur Längsrichtung auf und halten die Frachtstücke in ihrer Position. Die Führungsrollen greifen von unten an die Frachtstücke an und stützen diese ab. Sie ermöglichen einen einfachen und mit geringer Reibung behafteten Transport der Frachtstücke innerhalb des Frachtraums.

Ein wesentlicher Gedanke der vorliegenden Erfindung besteht darin, dass die Seitenführungsvorrichtung, die die eigentliche Führungs- und Haltefunktion der Seitenführung wahrnimmt, verschiebbar in einem Befestigungsrahmen gelagert ist. Die Seitenführungsvorrichtung kann also unterschiedliche Positionen einnehmen, um Frachtstücke mit unterschiedlichen Abmessungen zu halten und zu führen. Somit können zahlreiche Seitenführungsvorrichtungen, die an unterschiedlichen Positionen innerhalb des Frachtdecks angeordnet werden müssen, eingespart werden. Vorzugsweise lässt sich die Seitenführungsvorrichtung anhand eines Schlittens der bewegbar in dem Befestigungsrahmen gelagert ist, verschieben. Dieser Schlitten weist mindestens eine Führungsrolle auf, die den Transport der Frachtstücke erleichtert. Diese Führungsrolle nimmt also wie auch die Seitenführungsvorrichtung unterschiedliche Positionen ein. Durch das bewegliche Lagern der Führungsrolle können eine Vielzahl von Führungsrollen eingespart werden. Des Weiteren sind moderne Frachtdecks so dicht mit Funktionselementen (z.B. Seitenführungen, Führungsrollen, Riegelkrallen, PDUs) bestückt, dass es häufig schwierig ist, den richtigen Platz für die nötigen Funktionselemente auf dem Frachtdeck zu finden. Durch das erfindungsgemäße gezielte Einsparen von Führungsrollen und Seitenführungsvorrichtungen können Frachtdecks gestaltet werden, die eine noch höhere Anzahl von unterschiedlichen Konfigurationen ermöglichen.

Vorzugsweise sind die Seitenführungsvorrichtung und die Führungsrolle derart aneinander gekoppelt, dass diese gleichzeitig verschoben werden können. Insofern gestaltet sich auch die Umkonfiguration eines Frachtdecks wesentlich einfacher als dies bei herkömmlichen Systemen der Fall war.

Es ist möglich, die erfindungsgemäße Seitenführung derart auszubilden, dass sich der Befestigungsrahmen schräg zur Querrichtung des Flugzeugs erstreckt. Beispielsweise kann die Längsrichtung des Befestigungsrahmens im 45°-Winkel zur Querrichtung des Flugzeugs verlaufen. Vorzugsweise wird die Rotationsachse der Führungsrolle derart ausgerichtet, dass sie im Wesentlichen parallel zur Querrichtung des Flugzeugs verläuft, so dass die Frachtstücke effizient vom Bug zum Heck oder vom Heck zum Bug des Flugzeugs transportiert werden können. In einer bevorzugten Ausgestaltung ist die mindestens eine Führungsrolle im Schlitten um eine Rotationsachse drehbeweglich gelagert, wobei die Führungsrolle derart im Schlitten angeordnet ist, dass die Rotationsachse im Wesentlichen parallel zur Längsrichtung des Befestigungsrahmens - und somit parallel zur Querrichtung des Flugzeugs - verläuft.

Die Seitenführung kann mindestens eine Festsetzvorrichtung zum Festsetzen der Seitenführungsvorrichtung an mindestens zwei sich unterscheidenden Positionen in dem Befestigungsrahmen umfassen. Theoretisch wäre es denkbar, die erfindungsgemäße Seitenführung derart auszugestalten, dass sie sich in einem Bereich verschieben lässt, in dem Sie beim Beladen und Entladen keine funktionelle Wirkung hat. In einer anderen Konfiguration könnte sie ihre führende Position wahrnehmen. Vorzugsweise lässt sich die Seitenführungsvorrichtung jedoch in einer Vielzahl von Positionen festsetzen, so dass sie bei sich unterscheidenden Konfigurationen des Frachtdecks mit den Frachtstücken interagieren kann.

Die Festsetzvorrichtung kann Rastelemente und Gegenrastelemente an definierten Positionen im Befestigungsrahmen umfassen. Geeignet ausgebildete Rastelemente und Gegenrastelemente ermöglichen die Einnahme von vordefinierten Positionen seitens der Seitenführungsvorrichtungen. Diese Positionen können so gewählt werden, dass Frachtstücke mit vorgegebenen Standardabmessungen geführt werden können. Insofern erleichtern diese Rast- und Gegenrastelemente das Einnehmen einer bestimmten vorgegebenen Konfiguration.

Die Festsetzvorrichtung kann Achsstummel umfassen, die zum Lösen der Festsetzvorrichtung entgegen einer Federkraft, vorzugsweise am oder im Schlitten, verschiebbar gelagert sind. Vorzugsweise können diese Achsstummel in hierfür vorgesehene Bohrungen eingreifen und die Seitenführungsvorrichtung an einer bestimmten Position verankert werden. Eine derartige Verankerung ermöglicht es, die auf die Seitenführungsvorrichtung wirkenden Kräfte effizient in den Befestigungsrahmen und somit in das Frachtdeck einzuleiten. Die Federkraft kann derart ausgerichtet sein, dass es zu einer Art Schnappverbindung zwischen der Seitenführungsvorrichtung und dem Befestigungsrahmen kommt, so dass die Festsetzvorrichtung die Seitenführungsvorrichtungen an vorgegebenen Positionen festsetzt.

Die Seitenführungsvorrichtung kann einen Anschlag und/oder eine Riegelkralle umfassen, der bzw. die derart am Schlitten befestigt ist, dass der Anschlag bzw. die Riegelkralle von einer hochgestellten Arbeitsposition in eine abgesenkte Ruheposition verschwenkbar ist. Insofern ist es nicht nur möglich, dass der Anschlag bzw. die Riegelkralle an der Seitenführungsvorrichtung verschiedene Funktionspositionen einnimmt, um die Frachtstücke in diesen zu führen und zu halten. Zusätzlich kann der Anschlag oder die Riegelkralle abgesenkt werden, so dass sie von Frachtstücken überfahrbar sind. Somit lassen sich weitere Konfigurationen des Frachtdecks gewährleisten. Beispielsweise kann ein Frachtdeck geschaffen werden, das keine Führungen aufweist und von einem Fahrzeug befahren werden kann.

Der Anschlag bzw. die Riegelkralle kann um eine Schwenkachse drehbeweglich am Schlitten befestigt sein, wobei die Schwenkachse vorzugsweise denjenigen Teil der Festsetzvorrichtung bildet, über welchen beim Halten auftretende Kräfte in den Befestigungsrahmen geleitet werden. Insofern wirkt die Schwenkachse als Drehgelenk und leitet gleichzeitig in der Arbeitsposition die auftretenden Kräfte effizient in den Befestigungsrahmen ein.

Die Schwenkachse weist vorzugsweise die oben bereits genannten Achsstummel auf.

Der Anschlag bzw. die Riegelkralle kann auf mindestens einer Seite Schrägflächen aufweisen, um diese aus der Arbeitsposition in die Ruheposition beim Überfahren durch ein Frachtstück in einer Richtung zu bewegen, die ungleich einer Halterichtung des Anschlags bzw. der Riegelkralle ist.

Die Seitenführungsvorrichtung kann an dem Befestigungsrahmen abnehmbar angeordnet sein. Vorzugsweise lässt sich die Seitenführung an mindestens einem offenen Ende des Befestigungsrahmens aus der hierfür vorgesehenen Führung am Befestigungsrahmen herausnehmen. Somit ist es möglich, eine vorhandene Seitenführungsvorrichtung durch eine andere Seitenführungsvorrichtung auszutauschen. Des Weiteren kann die Seitenführung durch das Herausnehmen mindestens einer Seitenführungsvorrichtung derart ausgebildet werden, dass diese durch Frachtstücke zumindest teilweise überfahrbar ist. Somit ergeben sich weitere Konfigurationsmöglichkeiten des Frachtdecks.

Die Seitenführungsvorrichtung kann mindestens eine Riegelkralle zum zumindest abschnittsweisen Umgreifen der Frachtstücke umfassen.

Die Riegelkralle kann federnd am Schlitten und/oder der Schlitten federnd am Befestigungsrahmen befestigt sein. Insofern ist es möglich, auf die Riegelkralle wirkende Kräfte federnd aufzunehmen und über den Befestigungsrahmen in das Frachtdeck abzuleiten.

Die oben genannte Aufgabe wird ebenfalls durch eine Seitenführungsgruppe gelöst, wobei diese Seitenführungsgruppe eine Vielzahl von Seitenführungen, wie diese bereits beschrieben wurden, umfasst, wobei die Seitenführungsvorrichtungen der einzelnen Seitenführungen mindestens eine Schiene aufweisen, die mittels der Schlitten verschiebbar in dem Befestigungsrahmen gelagert ist. Die Schiene kann starr mit den einzelnen Schlitten der einzelnen Seitenführungen verbunden sein und die Frachtstücke führen.

Die Schiene kann Riegelkrallen, vorzugsweise von sich unterscheidenden Typen, aufweisen. Da sich die Frachtstücke nicht nur in ihren Querabmessungen sondern auch in ihren Längsabmessungen unterscheiden, ist es vorteilhaft, wenn die Schiene sich über längere Abschnitte erstreckt. Insofern können geeignete Funktionselemente, insbesondere Riegelkrallen, so vorgesehen werden, dass für jedes Frachtstück eine geeignete Halterung bereitsteht. Die Riegelkrallen können unmittelbar oberhalb eines entsprechenden Befestigungsrahmens oder diesbezüglich versetzt angeordnet werden. Es ist also möglich, die Position der Funktionselemente in Längsrichtung des Flugzeugs unabhängig von der Position der Befestigungsrahmen zu wählen. Des Weiteren kann eine Schiene eine Vielzahl von unterschiedlichen Riegelkrallen aufnehmen, die vorzugsweise in sich unterscheidenden Abständen hieran angeordnet sind.

Des Weiteren wird die Aufgabe durch ein Frachtladedeck mit mindestens einer der beschriebenen Seitenführungsgruppen und/oder mit mindestens einer der beschriebenen Seitenführungen gelöst.

Weitere vorteilhafte Ausführungsformen ergeben sich aus den Unteransprüchen.

Nachfolgend wird die Erfindung anhand von Zeichnungen näher erläutert. Hierbei zeigen:
- Fig. 1: eine Seitenansicht einer Seitenführung mit zwei Seitenführungsvorrichtungen;
- Fig. 2: eine zweite Seitenansicht der Seitenführung aus Fig. 1;
- Fig. 3: eine Draufsicht auf die Seitenführung aus Fig. 1;
- Fig. 4: eine perspektivische Ansicht mehrerer mittels einer Schiene verbundenen Seitenführungen;
- Fig. 5: eine perspektivische Ansicht der Seitenführung aus Fig. 1;
- Fig. 6: eine Seitenansicht einer Seitenführung mit einer Seitenführungsvorrichtung;
- Fig. 7: eine Draufsicht auf die Seitenführung aus Fig. 6;
- Fig. 8: ein Längsschnitt durch die Seitenführung aus Fig. 6;
- Fig. 9: eine perspektivische Ansicht der Seitenführung aus Fig. 6; und
- Fig. 10: eine Frontansicht der Seitenführung aus Fig. 6.

Bei der nachfolgenden Beschreibung werden für gleiche und gleich wirkende Teile dieselben Bezugsziffern verwendet.

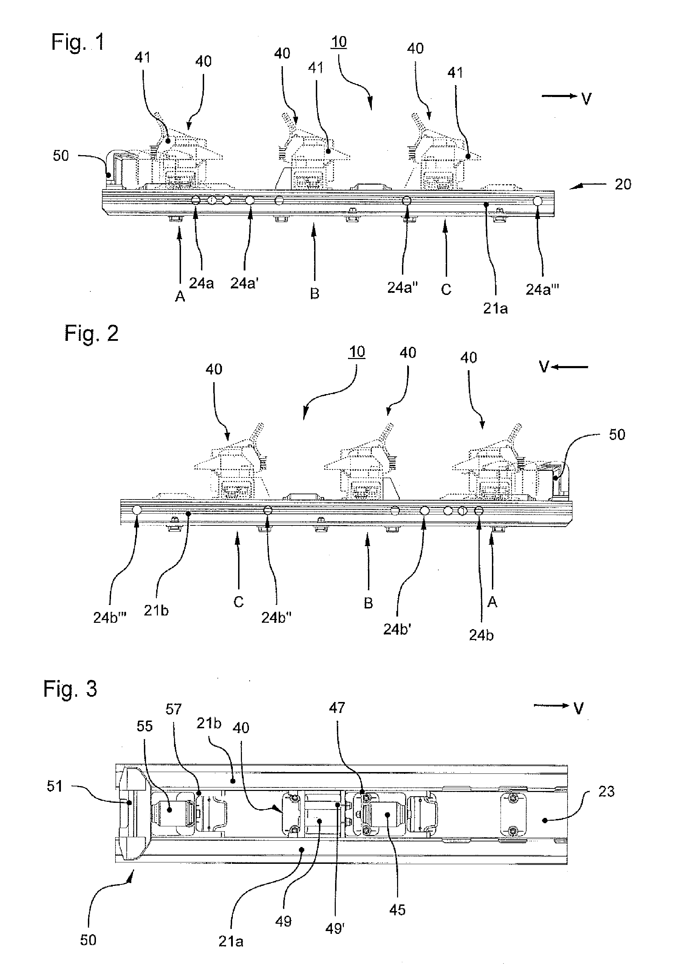

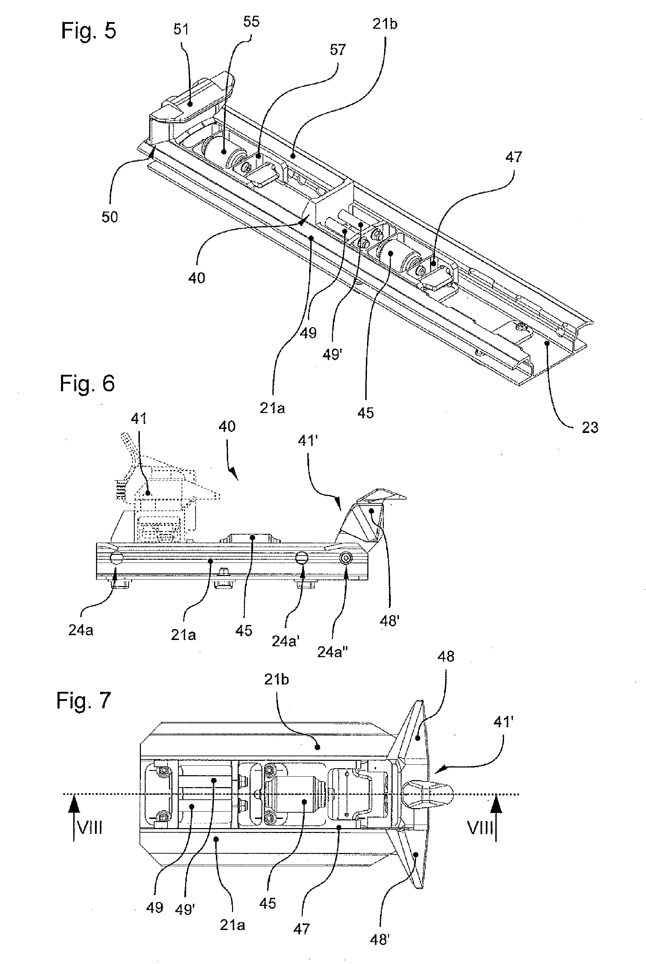

Die Fig. 1 bis 5 zeigen eine erste Ausführungsform der erfindungsgemäßen Seitenführung 10, während sich den Fig. 6 bis 10 eine zweite Ausführungsform entnehmen lässt.

Üblicherweise verwendet man ein kartesisches Koordinatensystem, um innerhalb eines Flugzeugs einzelne Richtungsangaben bereitzustellen. Hierbei erstreckt sich die x-Achse vom Heck zum Bug, die y-Achse verläuft quer zur x-Achse und liegt im Wesentlichen in der von den Flügeln aufgespannten Ebene. Die z-Achse steht senkrecht auf der x- und y-Achse.

Wie in den Fig. 1 und 3 gezeigt, hat die erfindungsgemäße Seitenführung 10 einen länglichen Befestigungsrahmen 20, der sich in Längsrichtung v erstreckt. Vorzugsweise wird die Seitenführung 10 derart im Flugzeugdeck angeordnet, dass die Längsrichtung v im Wesentlichen parallel zur Querrichtung y des Flugzeugs verläuft. Die Seitenführung 10 dient zur Führung von Frachtstücken in Längsrichtung (x-Richtung des Flugzeugs) und fungiert als Anschlag für die Frachtstücke, so dass diese in y-Richtung des Flugzeugs ausgerichtet werden.

Die Seitenführung 10 weist also den Befestigungsrahmen 20, der am Frachtdeck befestigt ist, eine erste Seitenführungsvorrichtung 40 und eine zweite Seitenführungsvorrichtung 50 auf. Die gestrichelten Linien in Fig. 1 und 2 verdeutlichen die Seitenführungsvorrichtungen 40, 50 in unterschiedlichen Positionen, nämlich einer ersten Position A, einer zweiten Position B und einer dritten Position C. Der Befestigungsrahmen 20, genauer gesagt dessen Seitenschienen 21a, 21b weisen Bohrungen 24a, 24a', 24a", 24a"', 24b, 24b', 24b", 23b''' auf, die es ermöglichen, die Seitenführungsvorrichtungen 40, 50 an den verschiedenen Positionen A, B, C festzusetzen.

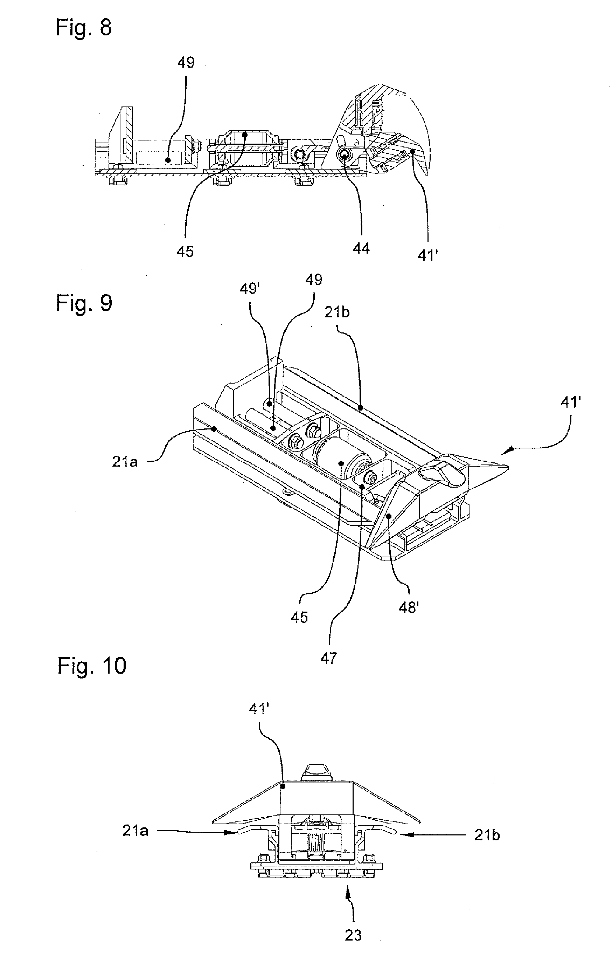

Der Befestigungsrahmen 20, der im Wesentlichen U-förmig ausgebildet ist und die Seitenschienen 21a, 21b aufweist, die integral mit einem Befestigungssockel 23 (vgl. Fig. 3) verbunden sind, ermöglicht es also, dass die Seitenführungsvorrichtungen 40, 50 innerhalb diesem in Längsrichtung v verschoben werden. Zum Festsetzen der ersten Seitenführungsvorrichtung 40 in der ersten Position A greifen hierfür vorgesehene Achsenstummel (vgl. die schematisch in Fig. 8 angedeuteten Achsenstummel in einer Schwenkachse 44), die einen Teil einer Festsetzvorrichtung bilden, in die Bohrungen 24a', 24b' wechselseitig ein. In der zweiten Position B greifen diese Achsenstummel in die Bohrungen 24a" und 24b" ein. In der dritten Position C rasten die Achsenstummel in die Bohrungen 24a'" und 24b'" ein.

Die Verschiebbarkeit der Seitenführungsvorrichtungen 40, 50 wird durch einen ersten Schlitten 47 bzw. durch einen zweiten Schlitten 57 (vgl. die Fig. 5) gewährleistet, wobei diese Schlitten 47, 57 gleitbeweglich in hierfür vorgesehenen Führungen der Seitenschienen 21a, 21b gelagert sind.

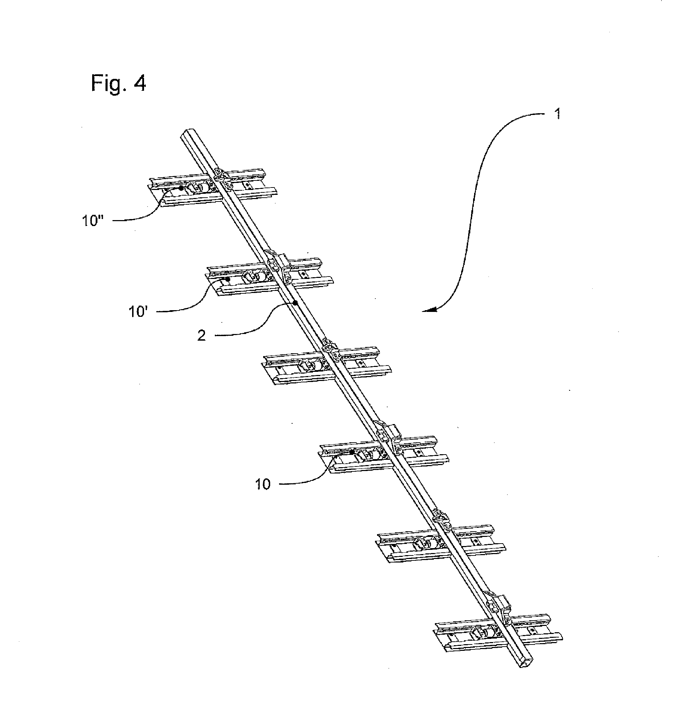

Die erste Seitenführungsvorrichtung 40 umfasst den ersten Schlitten 47, die Federlager 49, 49', eine Führungsschiene 2 (vgl. Fig. 4), die federnd auf dem Federlager 49, 49' gelagert ist, mindestens eine erste Führungskralle 41 und eine erste Führungsrolle 45. Der erste Schlitten 47 bildet einen Rahmen aus, in dem die erste Führungsrolle 45 drehbeweglich gelagert ist. Die erste Führungsrolle 45 lässt sich um eine Rotationsachse drehen und kann somit den Transport von aufliegenden Frachtstücken, vorzugsweise in x-Richtung, unterstützen. Die Rotationsachse ist im Wesentlichen entlang der Längsachse v des Befestigungsrahmens 20 ausgerichtet, so dass die Frachtstücke quer zu dieser Längsachse v transportiert werden können. Hierfür überragt die erste Führungsrolle 45 wie aus den Fig. 1 und 2 ersichtlich, den Befestigungsrahmen 20.

Wie aus Fig. 5 ersichtlich, weist die zweite Seitenführungsvorrichtung 50 einen zweiten Schlitten 57, eine zweite Führungsrolle 55 und eine fest mit dem zweiten Schlitten 57 verbundene Führungskralle 51 auf. Die Führungskralle 51 bildet in der Seitenansicht zusammen mit dem Befestigungsrahmen 20 ebenfalls ein U-Profil und ist dazu ausgelegt, Seitenabschnitte der Frachtstücke zu umgreifen, um diese sicher zu fixieren. Auch die zweite Führungskralle 51 kann eine führende Funktion wahrnehmen. Der zweite Schlitten 57 ist ebenfalls verschiebbar im Befestigungsrahmen 20 gelagert und bildet einen Rahmen für die zweite Führungsrolle 55. Die zweite Führungsrolle 55 ist in diesem Rahmen drehbeweglich um eine Rotationsachse gelagert, die im Wesentlichen koaxial zu der Rotationsachse der ersten Führungsrolle 45 verläuft. Die beiden Seitenführungsvorrichtungen 40, 50 lassen sich im Wesentlichen unabhängig voneinander verschieben. Es ist möglich, sowohl die erste als auch die zweite Seitenführungsvorrichtung 40, 50 aus dem Befestigungsrahmen 20 herauszunehmen, indem diese an den offenen Enden des Befestigungsrahmens 20 herausgefahren werden. Insofern ergeben sich schon hieraus zahlreiche Konfigurationsmöglichkeiten. So kann eine führende Funktion entweder ausschließlich durch die erste Seitenführungsvorrichtung 40 oder ausschließlich durch die zweite Seitenführungsvorrichtung 50 erfolgen. Zusätzlich können die erste und die zweite Seitenführungsvorrichtung 40, 50 eine Vielzahl von unterschiedlichen Positionen einnehmen, die z. B. durch die Bohrungen 24a, 24a', 24a", 24a"', 24b, 24b', 24b", 24b'" vorgegeben werden. So greift die zweite Seitenführungsvorrichtung 50 zu deren Befestigung beispielsweise in der in Fig. 5 gezeigten Position in die Bohrungen 24a, 24b ein.

Erfindungsgemäß können mehrere der beschriebenen Seitenführungen 10 zu einer Seitenführungsgruppe 1 zusammengeschlossen sein. Die Schiene 2 verbindet die ersten Seitenführungsvorrichtungen 40 der einzelnen Seitenführungen 10. Einige der weiteren Seitenführungen 10 tragen die Bezugszeichen 10', 10". Die Schiene 2 ist wie bereits erläutert, federnd an den Schlitten 47 der einzelnen Seitenführungen 10, 10', 10" gelagert und lässt sich in Längsrichtung v innerhalb der Befestigungsrahmen 20 verschieben. An der Oberseite der Schiene 2 sind einzelne Funktionselemente, z.B. eine Führungskralle 41 befestigt. Es sollte herausgehoben werden, dass die Funktionselemente (in Längsrichtung des Flugzeuges) unabhängig von der Position der Befestigungsrahmen 20 montiert werden können, so dass auch bei einer Befestigung der Befestigungsrahmen 20 in regelmäßigen Abständen am Frachtdeck die Funktionselemente in sich unterscheidenden Abständen zum Halten von Frachtstücken mit unterschiedlichen Abmessungen positioniert werden können. So zeigt das in Fig. 4 verdeutlichte Beispiel der Seitenführungsgruppe 1 Funktionselemente, die zur Befestigung von militärischen Paletten, sowie von in der zivilen Luftfahrt genutzten Frachtcontainern geeignet sind, wobei die Positionen der Riegelkralle bzw. Führungskralle 41 variieren.

Der Fig. 6 lässt sich ein weiteres Ausführungsbeispiel einer erfindungsgemäßen Seitenführung 10 entnehmen. Der Befestigungsrahmen 20 setzt sich, wie bereits der zuvor beschriebene Befestigungsrahmen 20, aus zwei Seitenschienen 21a, 21b und einem Befestigungssockel 23 zusammen. Der Befestigungsrahmen 20 ist deutlich kürzer als der gemäß dem Ausführungsbeispiel aus den Fig. 1 bis 5. In diesem ist lediglich eine Seitenführungsvorrichtung 40 verschiebbar gelagert. Wie aus den Fig. 6 bis 9 ersichtlich, weist diese Seitenführungsvorrichtung 40 eine erste Führungskralle 41 und eine zweite Führungskralle 41' auf. Die erste Führungskralle 41 ist im Wesentlichen identisch zu der ersten Führungskralle 41' gemäß dem Ausführungsbeispiel aus den Fig. 1 bis 5 ausgebildet und am Schlitten 47 angeordnet. Die zweite Führungskralle 41' ist drehbeweglich an dem Schlitten 47 befestigt und lässt sich aus einer Arbeitsposition (vgl. die Fig. 6, 7, 9 und 10) in eine Ruheposition (angedeutet in Fig. 8) verschwenken. In der Ruheposition kann die Führungskralle 41' von Frachtstücken überfahren werden.

Auch die Seitenführungsvorrichtung 40 gemäß dem zweiten Ausführungsbeispiel umfasst eine Führungsrolle 45, die in dem Schlitten 47 angeordnet ist. An dem einen Ende des Schlittens 47 setzt das Drehgelenk der zweiten Führungskralle 41' an und an dem anderen Ende befindet sich die erste Führungskralle 41'. Insgesamt lässt sich die gesamte Seitenführung 10 als eine Einheit innerhalb des Rahmens 20 verschieben. Auch die Seitenschienen 21a, 21b der Seitenführungsvorrichtung 40 weisen Bohrungen 24a, 24a', 24a" auf, um den Schlitten 47 an vorgegebenen Positionen festzusetzen. In einer Position (vgl. Fig. 6) befindet sich die zweite Führungskralle 41 derart nahe am Ende des Befestigungsrahmens 20, dass diese nach vorne hin in die Ruheposition abgeklappt werden kann. In anderen Positionen der Seitenführungsvorrichtung 40 ruhen die Schultern der zweiten Führungskralle 41' mit Schrägflächen 48, 48' auf den Seitenschienen 21a, 21b, so dass auf die zweite Führungskralle 41' wirkende Kräfte in die Seitenschienen 21a, 21b eingeleitet werden.

Vorzugsweise sind die Schrägflächen 48, 48' derart angeordnet, dass sie mit seitlich an die zweite Führungskralle 41' heranfahrende Frachtstücke derart in Wirkverbindung treten, dass die zweite Führungskralle 41' in die Ruheposition gedrückt wird.

In einem bevorzugten Ausführungsbeispiel rotiert die zweite Führungskralle 41' um eine Schwenkachse 44, die in ihrem Inneren Achsenstummel aufweist, die gleichzeitig zur Fixierung der Seitenführung 10 am Befestigungsrahmen 20 dienen (vgl. den Querschnitt gemäß Fig. 8). Vorzugsweise umfasst diese Schwenkachse 44 auch mindestens ein Federelement, das die zweite Führungskralle 41' in die Arbeitsposition vorspannt, so dass nach einem Überfahren der zweiten Führungskralle 41' durch ein Frachtstück diese wieder in ihre Ausgangsposition zurückkehrt.

Vorhergehend wurden Seitenführungen 10, 10', 10" beschrieben, bei denen in einem Befestigungsrahmen 20 eine oder zwei Seitenführungsvorrichtungen 40, 50 verschiebbar gelagert waren. Für den hier tätigen Fachmann sollte es offensichtlich sein, dass sich erfindungsgemäß mehrere Seitenführungsvorrichtungen 40, 50 in einem Befestigungsrahmen 20 lagern lassen. Des Weiteren sollte es für den hier tätigen Fachmann klar sein, dass sich die Länge der Befestigungsrahmen 20 beliebig an die vorgegebenen Anforderungen anpassen lässt.

Bei den vorhergehenden Ausführungsformen wurden vorwiegend Führungskrallen 41, 41', 51 beschrieben, die als Funktionselemente an den Schlitten 47, 57 angeordnet sind. Es ist möglich, hier andere Funktionselemente wie beispielsweise einen Anschlag an den Schlitten 47, 57 vorzusehen. Des Weiteren wurden Ausführungsformen erläutert, bei denen die Schlitten 47, 57 eine Führungsrolle 45, 55 beherbergen. Es sollte klar sein, dass die Schlitten 47, 57 mit beliebig vielen Führungsrollen 45, 55 ausgerüstet werden können.

Des Weiteren handelt es sich bei den vorhergehenden Ausführungsformen um derartige, bei denen die Befestigungsrahmen 20 quer zur Längsrichtung des Flugzeugs - also in y-Richtung - angeordnet sind. Für den hier tätigen Fachmann sollte es leicht möglich sein, die Seitenführungsvorrichtungen 40, 50 derart umzukonzeptionieren, das eine beliebige Ausrichtung der Befestigungsrahmen 20 möglich ist. Beispielsweise wäre eine Diagonalverschiebung der Schlitten 47, 57 im Frachtdeck denkbar.

### Bezugszeichenliste

- 1: Seitenführungsgruppe
- 2: Führungsschiene
- 10, 10', 10": Seitenführung
- 20: Befestigungsrahmen
- 21a, 21b: Seitenschiene
- 23: Befestigungsschienensockel
- 24a, 24a', 24a"', 24a"', 24b, 24b', 24b", 24b"': Bohrung
- 40: erste Seitenführungsvorrichtung
- 41, 41': Führungskralle
- 44: Schwenkachse
- 45: erste Führungsrolle
- 47: erster Führungsschlitten
- 48, 48': Schrägflächen
- 49, 49': Federlager
- 50: zweite Seitenführungsvorrichtung
- 51: zweite Führungskralle
- 55: zweite Führungsrolle
- 57: zweiter Schlitten
- v: Längsrichtung des Befestigungsrahmens

## Patentansprüche

1. Seitenführung (10, 10', 10") zum Führen von Frachtstücken, insbesondere Containern und/oder Paletten, in einem Flugzeug, umfassend:
- einen sich in Längsrichtung (v) erstreckenden Befestigungsrahmen (20);
- mindestens eine Seitenführungsvorrichtung (40, 50) mit einem Schlitten (47, 57), wobei die Seitenführungsvorrichtung (40, 50) in Längsrichtung (v) verschiebbar in dem Befestigungsrahmen (20) gelagert ist, wobei der Schlitten (47, 57) vorzugsweise mindestens eine Führungsrolle (45, 55) zum Abstützen der Frachtstücke aufweist.

2. Seitenführung nach Anspruch 1,
**dadurch gekennzeichnet, dass**
die mindestens eine Führungsrolle (45, 55) in dem Schlitten (47, 57) um eine Rotationsachse drehbeweglich gelagert ist, wobei die Führungsrolle derart im Schlitten (47, 57) angeordnet ist, dass die Rotationsachse im Wesentlichen parallel zur Längsrichtung (v) verläuft.

3. Seitenführung (10, 10', 10") nach mindestens einem der vorhergehenden Ansprüche,
**gekennzeichnet durch**
mindestens eine Festsetzvorrichtung zum Festsetzen der Seitenführungsvorrichtung (40, 50) an mindestens zwei sich unterscheidenden Positionen (A, B, C) in dem Befestigungsrahmen (20).

4. Seitenführung (10, 10', 10") nach mindestens einem der vorhergehenden Ansprüche,
**dadurch gekennzeichnet, dass**
die Festsetzvorrichtung Rastelemente und Gegenrastelemente (24a, 24b, 24a', 24b', 24a", 24b", 24a"', 24b"') an definierten Positionen im Befestigungsrahmen (20) umfasst.

5. Seitenführung (10, 10', 10") nach mindestens einem der vorhergehenden Ansprüche,
**dadurch gekennzeichnet, dass**
die Festsetzvorrichtung Achsstummel umfasst, die zum Lösen der Festsetzvorrichtung, insbesondere entgegen einer Federkraft, vorzugsweise am oder im Schlitten (47, 57), verschiebbar gelagert sind.

6. Seitenführung nach mindestens einem der vorhergehenden Ansprüche,
**dadurch gekennzeichnet, dass**
die Seitenführungsvorrichtung (40, 50) einen Anschlag und/oder eine Riegelkralle (41, 41', 51) umfasst, der bzw. die derart am Schlitten (47, 57) befestigt ist, dass der Anschlag bzw. die Riegelkralle (41, 41', 51) von einer hochgestellten Arbeitsposition in eine abgesenkte Ruheposition verschwenkbar ist.

7. Seitenführung (10, 10', 10") nach mindestens einem der vorhergehenden Ansprüche, insbesondere nach Anspruch 6,
**dadurch gekennzeichnet, dass**
der Anschlag bzw. die Riegelkralle (41, 41', 51) um eine Schwenkachse drehbeweglich am Schlitten (47, 57) befestigt ist, wobei die Schwenkachse vorzugsweise denjenigen Teil der Festsetzvorrichtung bildet, über welchen beim Halten auftretende Kräfte in den Befestigungsrahmen (20) geleitet werden.

8. Seitenführung (10, 10', 10") nach mindestens einem der vorhergehenden Ansprüche, insbesondere nach Anspruch 7,
**dadurch gekennzeichnet, dass**
die Schwenkachse Achsstummel umfasst, die zum Lösen der Festsetzvorrichtung entgegen einer Federkraft verschiebbar gelagert sind.

9. Seitenführung (10, 10', 10") nach mindestens einem der vorhergehenden Ansprüche, insbesondere nach einem der Ansprüche 6 bis 8,
**dadurch gekennzeichnet, dass**
der Anschlag bzw. die Riegelkralle (41, 41', 51) auf mindestens einer Seite Schrägflächen aufweist zur Bewegung des Anschlags bzw. der Riegelkralle (41, 41', 51) aus der Arbeitsposition in die Ruheposition beim Überfahren durch ein Frachtstück in einer Richtung, die ungleich einer Halterichtung des Anschlags bzw. der Riegelkralle (41, 41', 51) ist.

10. Seitenführung (10, 10', 10") nach mindestens einem der vorhergehenden Ansprüche,
**dadurch gekennzeichnet, dass**
die Seitenführungsvorrichtung (40, 50) an dem Befestigungsrahmen (20), herausnehmbar angeordnet ist.

11. Seitenführung (10, 10', 10") nach mindestens einem der vorhergehenden Ansprüche,
**dadurch gekennzeichnet, dass**
die Seitenführungsvorrichtung (40, 50) mindestens eine Riegelkralle (41, 41', 51) zum zumindest abschnittsweisen Umgreifen der Frachtstücke umfasst.

12. Seitenführung (10, 10', 10") nach mindestens einem der vorhergehenden Ansprüche, insbesondere nach Anspruch 11,
**dadurch gekennzeichnet, dass**
die Riegelkralle (41, 41', 51) federnd am Schlitten (47, 57) und/oder der Schlitten (47, 57) federnd am Befestigungsrahmen (20) befestigt ist.

13. Seitenführungsgruppe, umfassend eine Vielzahl von Seitenführungen gemäß
einem der vorhergehenden Ansprüche,
wobei die Seitenführungsvorrichtungen (40, 50) mindestens eine Schiene (2) umfassen, die mittels der Schlitten (47) verschiebbar in den Befestigungsrahmen (20) gelagert ist.

14. Seitenführungsgruppe nach Anspruch 13,
**dadurch gekennzeichnet, dass**
an der Schiene (2) Riegelkrallen (41, 41', 51), vorzugsweise von sich unterscheidenden Typen, angeordnet sind.

15. Frachtladedeck mit mindestens einer Seitenführungsgruppe gemäß dem Anspruch 13 oder 14 und/oder mit mindestens einer Seitenführung (10, 10', 10") gemäß einem der Ansprüche 1 bis 12.
